# EUROPEAN PATENT APPLICATION

(11) **EP 1 553 575 A1**
(43) Date of publication of application: **13.07.2005**
(21) Application number: 03764159.4
(22) Date of filing: 10.07.2003
(51) Int. Cl.: G11B 7/24, G11B 7/26

(54) **OPTICAL RECORDING MEDIUM, LIGHT-TRANSMITTING PROTECTIVE SHEET USED FOR SAME, AND METHOD FOR MANUFACTURING THEM**

(30) Priority: 10.07.2002 JP 2002200850
(71) Applicant: C. I. Kasei Company, Limited, Tokyo 104-8321 (JP); THE SAILOR PEN CO., LTD., Kohtoh-ku, Tokyo 135-8312 (JP)
(72) Inventor: MASUDA, Yoshikatsu c/o C.I. Kasei Company, Limited, Chuo-ku, Tokyo 104-8321 (JP); UEDA, Yukio c/o C.I. Kasei Company, Limited, Chuo-ku, Tokyo 104-8321 (JP); HISHINUMA, Eiji c/o The Sailor Pen Co., Ltd., Kohtoh-ku, Tokyo 135-8312 (JP); SHIMADA, Naoki c/o The Sailor Pen Co., Ltd., Kohtoh-ku, Tokyo 135-8312 (JP)
(74) Representative: Vuillermoz, Bruno
(86) International application number: PCT/JP2003/008772
(87) International publication number: WO 2004/008449

(57) **Abstract**

The optically transparent protective sheet is made of cured product of a radiation curable paint in the form of a sheet. The optical recording medium includes an optical recording layer formed on at least one surface of a substrate, an adhesive layer formed on the optical recording layer, and an optically transparent protective layer formed on the adhesive layer, wherein the optically transparent protective layer is formed by adhering the optically transparent protective sheet to the optical recording medium, with intervening the adhesive layer therebetween. Such an optically transparent protective sheet is superior optical characteristics, such as thickness accuracy, a birefringence, and light transmittance, and does not have a residual solvent. The optical recording medium using such an optically transparent protective sheet is superior in the optical characteristics, and is capable of increased capacity. The optical recording medium can be produced with a good productivity at low cost by using the optically transparent protective sheet.

## Description

### TECHNICAL FIELD

The present invention relates to an optical recording medium which has an optical recording layer for optically recording information, to an optically transparent protective sheet used therefor, and a producing process therefor.

### BACKGROUND ART

In recent years, in the field of information recording, research on optical information recording systems have advanced everywhere. These optical information recording systems have many advantages, e.g., it is possible to perform recording and replaying in a non-contact condition, and various memory types such as a replaying only type, an additive recording type, and a rewritable type. Thus, the optical information recording system is regarded as a system which enables realization of a inexpensive and mass produced files, and has a wide applicability ranging from industrial use to home applications.

Increasing capacity of optical recording media for use in various optical information recording systems has been attained mainly by shortening the wavelength of the laser which serves as a light source used for an optical information recording mode and by adopting a lens having a numerical aperture, so as to reduce spot size in the focal plane.

For example, a compact disc (CD) which is a conventional optical recording medium, has a laser wavelength of 780 nm, and an open area ratio (NA) of the lens of about 0.45. On the other hand, a digital versatile disc (DVD) has a capacity of about 7 times that of a CD by making the laser wavelength 650 nm and the NA about 0.6.

Furthermore, as a next generation optical recording medium, an optical recording medium having an optical recording layer on the surface of a disk substrate with a thickness of about 1.1 mm, and an about 0.1 mm in thick of an optical transparent protective sheet with a thickness of about 0.1 mm (cover layer) formed on the optical recording layer is proposed. For the optical recording medium, a laser wavelength is set to be 405 nm and an NA is set to be about 0.85, thereby attaining a capacity about 5 times that of the DVD.

The next generation optical recording medium is composed of a disc substrate having a thickness of about 1.1 mm which is made of polycarbonate type resin, a cyclic olefin type resin, and the like, at least one surface of which has a concavo-convex surface formed by a groove and a land, an optical recording layer composed of a reflective film made of aluminum, silver, or gold, or the like, formed on the concavo-convex surface, an optical recording layer composed of a thin film of a phase changing type (a phase changing thin film) made of an organic material or an inorganic material formed on the reflective film, and an optically transparent protective layer having a thickness of about 0.1 mm formed on the optical recording layer.

Because this optical recording medium is an optical recording medium of the type which reads reflected light of a laser emitted on an optical recording layer through an optically transparent protective layer, it is necessary for the optically transparent protective layer to have a high accuracy in thickness, specifically, ± 2 % or less, and preferably ± 1 % or less.

As a method for forming the optically transparent protective layer, a method including the steps of performing a spin coating of a liquefied non-hardened ultraviolet curing resin on the optical recording layer of the optical recording medium, and irradiating ultraviolet light under a nitrogen atmosphere to cure the ultraviolet curing resin on the optical recording layer of the optical recording medium, has been proposed. However, since a difference arose in film thickness between the central part and near a perimeter part when the optically transparent protective layer having a thickness of about 0.1 mm is formed by this method, it was difficult to obtain an optically transparent protective layer having uniform film thickness.

Accordingly, as another method for forming an optically transparent protective sheet, a method including the steps of molding a thermoplastic resin into a sheet to obtain an optically transparent protective sheet, and adhering the optically transparent protective sheet to an optical recording layer is proposed.

However, in the case in which this optically transparent protective sheet was formed by an extrusion method or a calender method, the optically transparent protective sheet to be formed usually has a dimensional accuracy in the thickness direction of at most about ± 5 % usually, or about ± 3 % even if expensive precision equipment is used, and hence it was difficult to attain the target of about ± 2 % or less, preferably ± 1 % or less. Moreover, because the optically transparent protective sheet is formed in a state of being pulled in the rolling-up direction in this method, there was also a problem that the birefringence of the optically transparent protective sheet may become large.

Accordingly, another method for forming an optically transparent protective sheet having high dimension accuracy, a casting method is proposed. The casting method is composed of the steps of dissolving a thermoplastic resin in a solvent to obtain a solution of the thermoplastic resin, and flowing the solution on a surface of a flat metallic mold, a base material, or a belt, thereby evaporating the solvent to obtain a sheet (refer to Japanese Patent Applications, unexamined First Publications Nos. 2001- 43566 and 2002- 74749).

According to this method, the optically transparent protective sheet having excellent thickness accuracy and a birefringence could be prepared, but there were problems in the solvent recovery in the production process, of the effects on the disk substrate by residual solvents in the film, and of generating air bubbles in the sheet by the solvent. In particular, if air bubbles exist in the optically transparent protective sheet, the optically transparency thereof will deteriorate. Moreover, if an attempt is made to produce the optically transparent protective sheet in conditions in which the amount of the solvent to be used is reduced so as to reduce the amount of the residual solvent in the sheet to a level at which these problems do not occur, then the productivity will be deteriorated and production cost will be very high.

### DISCLOSURE OF THE INVENTION

Therefore, an object the present invention is to provide an optically transparent protective sheet having excellent optical characteristics, such as thickness accuracy, a birefringence, and optical transparency, and less residual solvent, an optical recording medium having excellent optical characteristics and large capacity, and a production process therefor, which is capable of producing an optically transparent protective sheet and an optical recording medium at a low cost and at a high productivity.

That is, the optical recording medium of the present invention including a substrate, an optical recording layer formed on at least one surface of the substrate, an adhesive layer formed on the optical recording layer, and an optically transparent protective layer formed on the adhesive layer, wherein the transparent protective layer is a layer formed by adhering an optically transparent protective sheet, which is made by curing a radiation curable paint so as to form a sheet, to said optical recording layer, with intervening said adhesive layer therebetween.

Here, the adhesive layer is preferably composed of an optically transparent acrylic type resin adhesive or a radiation curable resin type adhesive.

In addition, the optically transparent protective sheet has preferably a primer layer on the adhesive side.

Moreover, the primer layer is preferably a dried coating of a solvent type paint which contains a polymerizable oligomer and/or an acrylic polyol type resin.

In addition, the radiation curable paint preferably contains a polymerizable oligomer and/or a polymerizable monomer.

Moreover, the process for producing an optical recording medium of the present invention including the steps of: an optical recording layer forming step for forming an optical recording layer on at least one surface of a substrate, an adhesive supplying step for supplying an adhesive onto the optical recording layer, and an adhering step for piling an optically transparent protective sheet, which is formed by curing a radiation curable paint so as to form a sheet, on an adhesive layer to adhere the optically transparent protective sheet to the optical recording layer.

In addition, the process for producing an optical recording medium of the present invention including the steps of: an optical recording layer forming step for forming an optical recording layer on at least one surface of a substrate, and an adhering step for adhering an optically transparent protective sheet, which is formed by curing a radiation curable paint so as to form a sheet, to the optical recording layer, with intervening a double-sided adhesive sheet therebetween.

Moreover, the optically transparent protective sheet of the present invention is made of a radiation curable paint which is cured so as to form a sheet.

Here, the optically transparent protective sheet of the present invention preferably further includes a primer layer made of a dried coating of a solvent type paint which contains a polymerizable oligomer and/or an acrylic polyol type resin.

In addition, the process for producing an optically transparent protective sheet includes the steps of: a coating forming step for applying a radiation curable paint to a surface of a strippable substrate to form a coating, a curing step for irradiating the coating to cure the coating thereby forming an optically transparent protective sheet, and a stripping step for stripping the optically transparent protective sheet from the strippable substrate.

Moreover, the process for producing an optically transparent protective sheet including the steps of: a primer layer forming step for applying a solvent type paint containing a polymerizable oligomer and/or an acrylic polyol type resin to form a coating, subsequently drying the coating to form a primer layer, a coating forming step for applying a radiation curable paint onto the primer layer to form a coating, a curing step for irradiating the coating to cure the coating thereby forming an optically transparent protective sheet, and a stripping step for stripping the optically transparent protective sheet from the strippable substrate.

The optically transparent protective sheet of the present invention has excellent optical characteristics such as thickness accuracy, a birefringence, and optical transparency, and less residual solvent. Moreover, the optical recording medium using the optically transparent protective sheet has excellent optical characteristics and a capability of increasing capacity. In addition, according to the process for producing an optically transparent protective sheet of the present invention, it is possible to produce an optically transparent protective sheet of the present invention at low cost and high productivity. Moreover, according to the process for producing an optical recording medium of the present invention, it is possible to produce an optical recording medium of the present invention at a low cost and high productivity.

### BEST MODES FOR CARRYING OUT THE INVENTION

Hereafter, the present invention will be explained in detail.

### Optical recording medium

An optical recording medium of the present invention includes a substrate, an optical recording layer formed at least on one side of the substrate, an adhesive layer formed on the optical recording layer, and an optically transparent protective layer formed on the adhesive layer.

As the substrate, for example, a disk substrate which is made of polycarbonate type resin, a cyclic olefin type resin, an acrylic type resin, and the like may be exemplified. The thickness of the substrate is, although it is not particularly limited, generally about 1.0-1.1 mm. On the substrate, the concavo-convex surface constituted from a groove part and a land part is usually formed at a predetermined track pitch. The track pitch is, although it is not particularly limited, usually 0.32 micrometers.

The optical recording layer is formed on the concavo-convex surface of the substrate. The optical recording layer is constituted from a reflective film which is made of aluminum, silver, gold, or the like, a phase changing type organic or inorganic thin film (a phase changing thin film), and the like. The optical recording layer may further include a dielectric protective film. The optical recording layer may be formed on both surfaces of the substrate, and in such a case, the optically transparent protective sheet is also formed on both surfaces of the substrate so as to cover both surfaces.

The adhesive layer adheres the optically transparent protective sheet to the optical recording layer. The adhesive layer is preferably a layer which is made of a transparent acrylic type resin adhesive or a radiation curable resin type adhesive because of its superior transparency, long term stability, and low allochroism.

The transparent acrylic type resin adhesive is usually used in a form of a double-sided adhesive sheet and a double-sided adhesive tape. As such a transparent acrylic type adhesive, for example, the transparent double-sided tape for optical film fixation by NITTO DENKO CORP. "CS-9611", and the like may be exemplified.

As the radiation curable type resin adhesive, for example, an ultraviolet curing resin type adhesive, an electron beam curing resin type adhesive, and the like may be exemplified. As the ultraviolet curing resin type and electron beam curing resin and radiation hardening resin, for example, a radiation curable resin which contains the below-mentioned polymerizable oligomer or a polymerizable monomer, and the like may be exemplified.

Because the radiation curable resin adhesive is spread uniformly and thinly over the substrate, the radiation curable type resin adhesive preferably has a low viscosity, specifically a viscosity before curing specifically measured with B type viscosity meter of 50 to 300 m Pa s.

Moreover, as the radiation curable type resin adhesive, what has a hardness after curing in terms of the pencil hardness test according to JIS K 5400 of not higher than "H" is preferred. By using such a radiation curing type resin adhesive, the warpage and strain of the optically transparent protective sheet accompanying curing shrinkage of the adhesive can be reduced.

The optically transparent protective layer is a layer which can be formed by adhering the optically transparent protective sheet of the present invention to the optical recording layer, with intervening an adhesive layer therebetween.

Although the thickness of the optically transparent protective layer is not particularly limited, the thickness of the optically transparent protective layer including the adhesive layer is generally about 100 micrometers.

### Optically transparent protective sheet

Hereinafter, the optically transparent protective sheet of the present invention will be explained.

The optically transparent protective sheet of the present invention is obtained by curing a radiation curable paint in the shape of a sheet. Here, the term "radiation" in the specification of the present invention refers to ultraviolet light or an electron beam.

As the radiation curable paint, one containing a polymerizable oligomer and a polymerizable monomer is preferred, because such a radiation curable paint can ensure thickness accuracy upon being coated to form a film.

As the polymerizable oligomer, for example, acrylic type oligomer such as a urethane acrylate oligomer, a polyester acrylate oligomer, an epoxy acrylate oligomer, and an acrylic resin acrylate; aryl ether type oligomers, a vinyl ether type oligomer, an aryl urethane type oligomer, and the like may be exemplified.

In these polymerizable oligomers, a urethane acrylate oligomer which is composed of a polymeric isocyanate and an acrylate having hydroxyl groups is preferred because of less curing shrinkage.

As the polymeric isocyanate, for example, an aromatic isocyanate, such as tolylene diisocyanate, xylene diisocyanate, and the like; aliphatic isocyanate and alicyclic isocyanate, such as hexa methylene diisocyanate, isophorone diisocyanate, hydrogenated xylene diisocyanate, and the like, and alicyclic isocyanate, and the like may be exemplified. As the acrylate having hydroxyl groups, for example, 2-hydroxyethyl acrylate, 2-hydroxypropyl acrylate, a pentaerythritol acrylate, and the like may be exemplified. Mass average molecular weight of the urethane acrylate oligomer is, in general, preferably about 400 to 7000.

Moreover, an acrylic resin acrylate may be exemplified as another preferred acrylic type oligomer. The acrylic resin acrylate is a product which is prepared by copolymerizing acrylate monomer and/or methaacrylate having functional groups such as carboxyl group, epoxy group, hydroxyl group, and the like, with an acrylic copolymer resin composed of polymethyl methacrylate as a main component, thereby performing addition reaction with an acrylate type monomer having functional groups which cause additional reactions corresponding to each of the functional groups to introduce double bonds.

As the polymerizable monomer, for example, a monofunctional acrylate such as hexyl acrylate, 2-ethyl hexyl acrylate, isobornyl acrylate, isooctyl acrylate, and the like; a difunctional acrylate, such as such 1,6-hexanediol diacrylate, neopentyl glycol diacrylate, and the like; and a multifunctional acrylate, such as trimethylol propane triacrylate, dipenta erythritol hexaacrylate, and the like may be exemplified.

In the case in which the radiation curable paint is an ultraviolet light curable resin which is cured by an ultraviolet light, a photopolymerization initiator and the like is contained. In the case in which the radiation curable paint is an electron beam curable paint which is cured by an electron beam, a photopolymerization initiator is unnecessary.

As the radiation curable paint, a non-solvent type radiation curable paint is preferred because the non-solvent type radiation curable paint has no risk of causing the problem of residual solvent. In addition, the radiation curable paint may contain such an extremely small amount of solvent that there will be no problem of residual solvent.

As examples of the radiation curable paint, a non-solvent type radiation curable paint containing an aliphatic urethane acrylate oligomer using aliphatic isocyanate, and a polymerizable monomer, "KRM7818", "KRM7842", and "KRM7946" produced by DAICEL USB Co., Ltd.; a non-solvent type radiation curable paint containing a difunctional urethane acrylate oligomer and a multifunctional acrylate, "CTO2H CLEAR" and "CTO2aG CLEAR" produced by the SHOWA INK MANUFACTURING Co., Ltd., and the like may be exemplified.

The optically transparent protective sheet of the present invention preferably has a primer layer on one side (adhesive layer side), in order to improve adhesion with an adhesive layer. As this primer layer, a dried coating of a solvent type paint which contains a polymerizable oligomer and/or an acrylic polyol type resin is preferred, because of its excellent adherence to the radiation curable paint.

As the solvent type paint which contains a polymerizable oligomer, a radiation curable resin containing an acrylic type oligomer may be exemplified, and as a preferred examples thereof, "CSEB5 MEDIUM" (urethane acrylate oligomer) and "CSEB12 MEDIUM" (acrylic resin acrylate type oligomer) produced by SHOWA INK MANUFACTURING Co., Ltd., may be exemplified.

As an exemplariness of the solvent type paint which contains acrylic polyol type resin, "MKA MEDIUM", "CSEB2 MEDIUM", and "CSEB10 MEDIUM" produced by SHOWA INK MANUFACTURING Co., Ltd., and the like may be exemplified.

These solvent type paints may be used alone, or two or more paints thereof may be used in combination, by mixing a solvent type paint containing a polymerizable oligomer with a solvent type paint containing acrylic polyol type resin.

The thickness of the optically transparent protective sheet of the present invention is generally determined so that the total thickness of the optically transparent protective sheet and the adhesive layer is about 100 micrometers, upon being adhered to the optical recording layer with intervening the adhesive layer therebetween, although the thickness of the optically transparent protective sheet is not particularly limited.

As for the optically transparent protective sheet for optical recording media, a high thickness accuracy is required. The thickness accuracy of the optically transparent protective sheet for optical recording media is preferably ± 2 % or less, and is more preferably ± 1 % or less.

The birefringence of the optically transparent protective sheet of the present invention is preferably as small as possible, because of its excellent reliability of the signal information outputted and inputted. Concretely, the birefringence of the optically transparent protective sheet of the present invention is preferably 10 nm or less, and more preferably 2 nm or less.

Moreover, the hardness of the optically transparent protective sheet of the present invention is preferably "B" or more, in terms of the pencil hardness test according to JIS K 5400, in view of crack prevention on use or pollution control.

### Process for producing an optically transparent protective sheet

The optically transparent protective sheet of the present invention is produced, for example, as follows.

First, a radiation curable paint is continuously applied to the surface of the endless belt-like strippable base material moving in a fixed direction to form a coating thereon (coating forming step). Subsequently, the resultant coating is irradiated to cure the coating (curing step). After curing the coating, the resultant cured coating is stripped from the strippable base material and wound up, thereby producing an optically transparent protective sheet continuously (stripping step).

In addition, when the optically transparent protective sheet has a primer layer thereon, it is produced as follows, for example.

First, the solvent type paint containing a polymerizable oligomer and/or acrylic polyol type resin is applied continuously to the surface of the endless belt-like strippable base material moving in a fixed direction to form a coating on the base material, and then the resultant coating is dried to form a primer layer (primer layer forming step). Subsequently, on the resultant primer layer, a radiation curable paint is applied continuously to form a coating (coating forming step). Subsequently, the resultant coating is irradiated to be cured (curing step). After curing the coating, the resultant cured coating is stripped from the strippable base material and wound up, thereby producing an optically transparent protective sheet continuously (stripping step).

Here, as the strippable base material, strippable films, such as a polyethylene terephthalate (PET) film, a stainless steel belt, and the like, can be used.

As a method for applying the paint to the strippable base material, a die coating method, a knife coating method, a photogravure coating method, and the like are employable. Especially, the die coating method is preferred, because of its excellent accuracy of dimension of the optically transparent protective sheet to be obtained. As a die coater used in this die coating method, "ULTRA PRECISION DIE COATER" produced by Toshiba Machine Co., Ltd. "SLOT DIE COATER" produced by YASUI SEIKI Co., Ltd., "SLIT DIE COATER" produced by TORAY ENGINEERING Co., Ltd., and "DIE COATER" produced by MUSASHINO KIKAI Co., Ltd., and the like may be exemplified.

As a method for curing the radiation curable paint, electron beam curing is preferred. Because addition of additives such as a photopolymerization initiator to the radiation curable paint can be omitted by using electron beam curing, there is no deterioration of the transparency which is caused by the decomposed substances of the additives. Moreover, productivity can be improved by the large energy of an electron beam.

### The process for producing an optical recording medium

Next, the process for producing an optical recording medium of the present invention will be explained.

First, a ring-like substrate is prepared by an injection molding. Onto a concavo-convex surface of the substrate thus prepared, reflective films composed of aluminum, silver, gold, and the like, and organic or inorganic phase change type thin films, and the like are deposited by a sputtering method to form an optical recording layer (optical recording layer forming step).

Next, a radiation curable resin type adhesive is applied to the optical recording layer (adhesive applying step).

Subsequently, the optically transparent protective sheet of the present invention is cut into the shape of a ring and is disposed on the adhesive to spread the adhesive over between the optically transparent protective sheet and the optical recording layer. Subsequently, irradiation is performed thereon to cure the adhesive so as to form an adhesive layer, thereby obtaining an optical recording medium in which the optically transparent protective sheet is adhered to the optical recording layer (adhering step).

Moreover, in the case of using a transparent acrylic type resin adhesive instead of the radiation curable resin type adhesive, an optical recording medium is produced as follows.

After forming the optical recording layer on at least one side of the substrate (optical recording layer forming step), on the optical recording layer, a double-sided adhesive sheet which is composed of a transparent acrylic type resin adhesive is arranged, and further, on this, the optically transparent protective sheet of the present invention is arranged, and the optically transparent protective sheet of the present invention is adhered to the optical recording layer through the double-sided adhesive sheet (adhering step). Alternatively, after forming the optical recording layer on at least one side of the substrate (optical recording layer forming step), the optically transparent protective sheet of the present invention in which a double-sided adhesive tape composed of a transparent acrylic type resin adhesive is laminated is arranged on the optical recording layer, and the optically transparent protective sheet of the present invention is adhered to the optical recording layer, with intervening a double-sided adhesive tape therebetween (adhering step).

As explained above, because the optically transparent protective sheet of the present invention is a sheet-like cured coating of the radiation curable paint, the optically transparent protective sheet of the present invention has an improved thickness accuracy and a lower birefringence, compared with a coating obtained by a spin coat, and a sheet produced by an extrusion method and a calender method.

Moreover, because the optically transparent protective sheet of the present invention is composed of the radiation curable paint, the optically transparent protective sheet of the present invention has no problems of a residual solvent or air bubbles and has superior transparency and dimensional stability, compared with an optically transparent protective sheet to be produced by a conventional casting method using a thermoplastic resin containing such a large amount of solvent.

In addition, in the optical recording medium, the optically transparent protective layer is a layer in which the optically transparent protective sheet of the present invention is adhered to the optical recording layer through the adhesive layer intervened therebetween, and hence the optical recording medium of the present invention is excellent in optical characteristics and is capable of increasing its capacity. Moreover, there are no risks of the optical recording layer being affected by residual solvent.

Such an optical recording medium is suitable for an optical recording medium of the type which reads catoptric light through an optically transparent protective film, while irradiating a purple-blue color laser with a laser wavelength of 405 nm at the groove part of an optical recording layer, and is capable of attaining a numerical aperture.

Moreover, in the process for producing an optically transparent protective sheet of the present invention, the coating of the radiation curable paint applied to the strippable base material is cured by irradiating radiation to form the optically transparent protective sheet, it is possible to produce the optically transparent protective sheet at a low cost and with high productivity, compared with a conventional casting method using a thermoplastic resin containing such a large amount of solvent.

In addition, in the process for producing an optical recording medium of the present invention, the optically transparent protective sheet, which is prepared by curing a radiation curable paint to form a sheet like cured article, is adhered to the optical recording layer, and hence it is possible to produce the optical recording medium at a low cost and a high productivity.

### Examples

Measurement of each of the physical properties in these Working Examples was performed as follows.

### Thickness of an optically transparent protective sheet

It was measured using a continuation film thickness measuring apparatus produced by ANRITSU CORP., Ltd., model "K306C."

As measurement samples, 5 pieces of sample cut into a belt-like form having 3 m length in a longitudinal direction of the film and 5 cm width in a width direction of the film, and 5 pieces of sample cut into a belt-like form having a 5 cm length in a longitudinal direction of the film and the same width as that of the film were employed.

### (Birefringence)

The birefringence of the optically transparent protective sheet was measured using a birefringence meter for long films by OJI PAPER Co., Ltd. (Optical Birefringence Analyzer) model "KOBRA-21 SDH".

### Working Example 1

Anon-solvent radiation curable paint (the product "KRM7818" produced by DAICEL UCB Co., Ltd., urethane acrylate type) was applied to a strippable film made of a smooth PET film through a die coating method, and subsequently an electron beam irradiation was performed on the applied radiation curable paint within a nitrogen gas atmosphere on condition of absorbed dose 7 Mrad and 50 m/min. passage speed, thereby curing the radiation curable paint to form an optically transparent protective sheet. The optically transparent protective sheet separated from the strippable film has a thickness within a limit of 95 micrometer ± 0.9 micrometer, and a birefringence at a measurement wavelength 590 nm of 1.37 nm.

Next, a disk substrate made of polycarbonate resin having a thickness of about 1.1 mm was prepared by an injection molding, and the optical recording layer composed of an aluminum reflective film and a coating thin film of organic dye was formed on the disk substrate by a sputtering method. While rotating the disk substrate, a liquid ultraviolet curable resin adhesive (produced by NAGASE TEXTILE Co., Ltd) was applied onto the optical recording layer, and one cut into a ring form from the above optically transparent protective sheet was disposed thereon. In this state, the disk substrate was rotated at a high velocity to spread the adhesive uniformly between the optically transparent protective sheet and the optical recording layer by centrifugal force, thereby shaking an excessive adhesive off, and then ultraviolet light was irradiated threreon to cure the adhesive, thereby forming an adhesive layer having a thickness of 5.0 micrometers, thereby obtaining an optical recording medium.

### Working Example 2

A primer of solvent type acrylic polyol type resin (a product "MKA MEDIUM" produced by SHOWA INK INDUSTRIAL Co., Ltd., of which the solid content is 40 mass %) was applied to a strippable film made of a smooth PET film by a coater to form a coating, and the coating was dried to form a primer layer having a thickness of 2 micrometers. Next, to the resultant primer layer, a non-solvent type radiation curable paint (a product "KRM7842" produced by DAICEL UCB Co., Ltd., urethane acrylate type) was applied by a die coating method, subsequently, onto the applied non-solvent type radiation curable paint, an electron beam was irradiated within a nitrogen gas atmosphere on condition of 7 Mrad absorbed dose and at a passage speed of 50m/min. to cure the radiation curable paint, thereby forming an optically transparent protective sheet. The optically transparent protective sheet with the primer layer separated from the strippable film has a thickness within the limit of 75 micrometer ± 0.6 micrometer and a birefringence at a measurement wavelength 590 nm of 1.30 nm.

Next, a disk substrate made of polycarbonate resin having a thickness of about 1.1 mm was prepared by an injection molding, and an optical recording layer composed of an aluminum reflective film, an alloy type phase change thin film, and a dielectric protective film was formed onto the disk substrate by a sputtering method. Next, onto the optical recording layer on the disk substrate, one cut into a ring form from the above optically transparent protective sheet was disposed, while intervening a double-sided adhesive sheet (produced by NITTO DENKO CORP., Ltd.) including a transparent acrylic resin adhesive having a thickness of 25 micrometers therebetween. In this state, the optically transparent protective sheet is adhered to the optical recording medium, with intervening the double-sided adhesive sheet, thereby forming an optical recording medium.

### Working Example 3

An optically transparent protective sheet having a primer layer was produced in the same way as in the Working Example 2 except that a primer in which each of a solvent type acrylic polyol type resin (a product "MKA MEDIUM" produced by SHOWA INK MANUFACTURING Co., Ltd., which contains a solid content of 40 mass %) and a solvent type urethane acrylate oligomer (a product "CSEB5 MEDIUM" produced by SHOWA INK MANUFACTURING Co., Ltd., which contains a solid content of 40 mass %) was mixed with each other in an equivalent amount, respectively, was used as the primer in the Working Example 2. The optically transparent protective sheet having a primer layer separated from the strippable film has a thickness which is within the limit of 75 micrometer ± 0.6 micrometer and a birefringence measured at wavelength of 590 nm being 1.40 nm.

Next, the optical recording medium was prepared in the same way as in the Working Example 2.

### Working Example 4

An optically transparent protective sheet having a primer layer was produced in the same way as in the Working Example 2 except that a primer in which each of a solvent type acrylic polyol type resin (a product "MKA MEDIUM" produced by SHOWA INK MANUFACTURING Co., Ltd., which contains a solid content of 40 mass %) and a solvent type acrylic resin acrylate type oligomer (a product "CSEB12 MEDIUM" produced by SHOWA INK MANUFACTURING Co., Ltd., which contains a solid content of 40 mass %) was mixed with each other in an equivalent amount, respectively, was used as the primer in the Working Example 2. The optically transparent protective sheet having a primer layer separated from the strippable film has a thickness which is within the limit of 75 micrometer ± 0.6 micrometer and a birefringence measured at wavelength of 590 nm being 1.35 nm.

Next, the optical recording medium was prepared in the same way as in the Working Example 2.

### Working Example 5

An optically transparent protective sheet having a primer layer (2 micrometers thick) was produced by the same way as in the Working Example 2 except that a solvent type acrylic resin acrylate type oligomer (a product "CSEB12 MEDIUM" produced by SHOWA INK MANUFACTURING Co., Ltd., which contains a solid content of 40 mass %) and a non-solvent type radiation curable paint (a product "KRM 7846" produced by DAICEL USB Co., Ltd., urethane acrylate type) were used as the primer in the Working Example 2. The optically transparent protective sheet having a primer layer separated from the strippable film has a thickness which is within the limit of 95 micrometer ± 1 micrometer and a birefringence measured at wavelength of 590 nm being 1.37 nm.

Next, the optical recording medium was prepared in the same way as in the Working Example 1.

### Working Example 6

A non-solvent radiation curable paint (a product "CTO2H CLEAR" produced by SHOWA INK Co., Ltd. containing an urethane acrylate oligomer in an amount of 70 mass % and a multi-function acrylate type monomer in an amount of mass 30 %) was applied to a strippable film made of a smooth PET film through a die coating method, subsequently an electron beam irradiation was performed onto the applied radiation curable paint within a nitrogen gas atmosphere on condition of absorbed dose 7 Mrad and 50 m/min. passage speed, thereby curing the radiation curable paint to form an optically transparent protective sheet. The optically transparent protective sheet separated from the strippable film has a thickness within the limit of 75 micrometer ± 0.4 micrometer, a birefringence at a measurement wavelength 590 nm of 1.0 nm, and a pencil hardness (JIS K 5400) of "H".

Onto the resultant optically transparent protective sheet, a transparent double-sided adhesive tape for fixing an optical film having a thickness of adhesive layer being 25 micrometers (a product "CS-9611" produced by NITTO DENKO CORP., Ltd.) was laminated, while stripping a separator film from one surface thereof, subsequently a ring was punched out from the resultant laminate to obtain an optically transparent protective sheet having an adhesive layer.

Next, a disk substrate made of polycarbonate resin having a thickness of about 1.1 mm was prepared by an injection molding, and an optical recording layer composed of an aluminum reflective film, an alloy type phase changing thin film, and a dielectric protective layer was formed on the disk substrate by a sputtering method. Subsequently, on the optical recording layer of the disk substrate, the above-mentioned optically transparent protective sheet having an adhesive layer was adhered under a reduced pressure, while stripping another separator film of the double-sided adhesive tape therefrom, thereby obtaining an optical recording medium.

### Working Example 7

An optically transparent protective sheet was produced in the same way as in the Working Example 6 except that a product "CTO2aG CLEAR" (produced by SHOWA INK MANUFACTURING Co., Ltd., which contains an urethane acrylate oligomer of 80 mass % and a multi-function acrylate type monomer of 20 mass %) was used as the non-solvent radiation curable paint in the Working Example 6. The optically transparent protective sheet separated from the strippable film has a thickness which is within the limit of 75 micrometer ± 0.4 micrometer, a birefringence measured at wavelength of 590 nm being 1.0 nm, and a pencil hardness (JIS K 5400) of "H".

Next, the optical recording medium was prepared in the same way as in the Working Example 6.

### Working Example 8

To a strippable film made of a smooth PET, a primer of a solvent type acryl polyol type resin (a product "KA MEDIUM 4b" produced by SHOWA INK Co., Ltd., having a solid content of 40 mass %) was applied by a coater, and then dried to form a primer layer having a thickness of 2 micrometers. Next, a non-solvent radiation curable paint (a product "CTO2aG CLEAR" produced by SHOWA INK Co., Ltd., containing a urethane acrylate oligomer of 80 mass % and a multi-function acrylate type monomer of 20 mass %) was applied to the primer layer through a die coating method, and subsequently, an electron beam irradiation was performed onto the applied radiation curable paint within a nitrogen gas atmosphere on condition of absorbed dose 7 Mrad and 50 m/min passage speed, thereby curing the radiation curable paint to form an optically transparent protective sheet. The optically transparent protective sheet separated from the strippable film has a thickness within the limit of 75 micrometer ± 0.4 micrometer, a birefringence at a measurement wavelength 590 nm of 1.0 nm, and a pencil hardness (JIS K 5400) of "H" on the side where the radiation curable paint was cured.

Onto the resultant optically transparent protective sheet, a transparent double-sided adhesive tape for fixing an optical film having a thickness of an adhesive layer being 25 micro meter (a product "CS-9611" produced by NITTO DENKO CORP., Ltd.) was laminated, while stripping a separator film from one surface thereof, and subsequently a ring was punched out from the resultant laminate to obtain an optically transparent protective sheet having an adhesive layer.

Next, a disk substrate made of polycarbonate resin having a thickness of about 1.1 mm was prepared by an injection molding, and an optical recording layer composed of an aluminum reflective film, an alloy type phase changing thin film, and a dielectric protective layer was formed on the disk substrate by a sputtering method. Subsequently, on the optical recording layer of the disk substrate, the above-mentioned optically transparent protective sheet having an adhesive layer was adhered under a reduced pressure, while stripping another separator film of the double-sided adhesive tape therefrom, thereby obtaining an optical recording medium.

### Working Example 9

An optically transparent protective sheet having a primer layer was produced in the same way as in the Working Example 8, except that a primer in which each of a solvent type acrylic polyol type resin (a product "KA MEDIUM 4b" produced by SHOWA INK MANUFACTURING Co., Ltd., having a solid content of 40 mass %) and a solvent type urethane acrylate oligomer (a product "CSEB5 MEDIUM" produced by SHOWA INK MANUFACTURING Co., Ltd., having a solid content of 40 mass %) was mixed with each other in an equivalent amount, respectively, was used as the primer layer in the Working Example 8. The optically transparent protective sheet separated from the strippable film has a thickness which is within the limit of 75 micrometer ± 0.6 micrometer, a birefringence measured at wavelength of 590 nm being 1.0 nm, and a pencil hardness (JIS K 5400) of "H" on the side where the radiation curable paint was cured.

Next, the optical recording medium was prepared by the same way as in the Working Example 8.

### Comparative example 1

A transparent sheet made of polycarbonate resin having an average thickness of 95 micrometers was produced by a melt extrusion method. The thickness of the sheet was 95 micrometer ± 4 micrometer, and the birefringence thereof was 140 nm.

### INDUSTRIAL APPLICABILITY

The optical recording medium of the present invention is suitable for an optical recording medium of the next generation, which reads catoptric light of a purple-blue color laser having a laser wavelength of 405 nm which is irradiated through an optical transparent protective film at the groove part of an optical recording layer, and is capable of attaining a numerical aperture.

## Claims

1. An optical recording medium comprising a substrate, an optical recording layer formed on at least one surface of the substrate, an adhesive layer formed on the optical recording layer, and an optically transparent protective layer formed on the adhesive layer, wherein the transparent protective layer is a layer formed by adhering an optically transparent protective sheet, which is made by curing a radiation curable paint so as to form a sheet, to said optical recording layer, with intervening said adhesive layer therebetween.

2. An optical recording medium as set forth in claim 1, wherein said adhesive layer is composed of a transparent acrylic type resin adhesive or a radiation curable resin type adhesive.

3. An optical recording medium as set forth in claim 1, wherein said optically transparent protective sheet further comprises a primer layer on the adhesive side thereof.

4. An optical recording medium as set forth in claim 3, wherein said primer layer is a dried coating of a solvent paint contaning a polymerizable oligomer and/or an acrylic polyol type resin.

5. An optical record medium as set forth in claim 1, wherein said radiation curable paint contains a polymerizable oligomer and a polymerizable monomer.

6. A process for producing an optical recording medium comprising the steps of :
- an optical recording layer forming step for forming an optical recording layer on at least one surface of a substrate ;
- an adhesive supplying step for supplying an adhesive onto the optical recording layer, and ;
- an adhering step for disposing an optically transparent protective sheet, which is formed by curing a radiation curable paint so as to form a sheet, on an adhesive layer to thereby adhere the optically transparent protective sheet to the optical recording layer.

7. A process for producing an optical recording medium comprising the steps of:
- an optical recording layer forming step for forming an optical recording layer on at least one surface of a substrate, and
- an adhering step for adhering an optically transparent protective sheet, which is formed by curing a radiation curable paint so as to form a sheet, to the optical recording layer, with intervening a double-sided adhesive sheet therebetween.

8. An optically transparent protective sheet made of a radiation curable paint which is cured so as to form a sheet.

9. An optically transparent protective sheet as set forth in claim 8 further comprising a primer layer made of a dried coating of a solvent type paint containing a polymerizable oligomer and/or an acrylic polyol type resin.

10. A process for producing an optically transparent protective sheet comprising the steps of :
- a coating forming step for applying a radiation curable paint to a surface of a strippable substrate to form a coating,
- a curing step for irradiating the coating to cure the coating thereby forming an optically transparent protective sheet, and
- a stripping step for stripping the optically transparent protective sheet from the strippable substrate.

11. A process for producing an optically transparent protective sheet comprising the steps of :
- a primer layer forming step for applying a solvent type paint containing a polymerizable oligomer and/or an acrylic polyol type resin to form a coating, subsequently drying the coating to form a primer layer ;
- a coating forming step for applying a radiation curable paint onto the primer layer to form a coating,
- a curing step for irradiating the coating to cure the coating thereby forming an optically transparent protective sheet, and
- a stripping step for stripping the optically transparent protective sheet from the strippable substrate.
